# EUROPEAN PATENT SPECIFICATION

(11) **EP 2 149 871 B1**
(45) Date of publication and mention of the grant of the patent: **26.02.2014**
(21) Application number: 09009613.2
(22) Date of filing: 24.07.2009
(51) Int. Cl.: G09G 3/34

(54) **Display device having reduced waterfall noise**
Anzeigevorrichtung mit verringertem Wasserfallrauschen
Dispositif d'affichage doté d'un bruit de cascade réduit

(30) Priority: 29.07.2008 KR 20080074083
(43) Date of publication of application: 03.02.2010
(73) Proprietor: Samsung Display Co., Ltd., Yongin-City, Gyeonggi-Do (KR)
(72) Inventor: Byun, Sang-Chul, Anyang-si Gyeonggi-do (KR); Park,Se-Ki, Asan-si Chungcheongnam-do (KR); Ye, Byoung-Dae, Yongin-si Gyeonggi-do (KR); Kang, Eui-Jeong, Asan-si, Chungcheongnam-do (KR); Kwon, Yong-Hoon, Asan-si Chungcheongnam-do (KR); Kim, Gi-Cheri, Asan-si, Chungcheongnam-do (KR); Yang, Byung-Choon, Seoul (KR)
(74) Representative: Weitzel, Wolfgang

(56) References cited:
- EP-A2- 1 091 342
- US-A1- 2005 248 518
- US-A1- 2007 115 209
- US-A1- 2007 262 948

## Description

### BACKGROUND OF THE INVENTION

### 1. Field of the Invention

The present invention relates to a display device, and more particularly, to a display device with reduced waterfall noise for improved display quality.

### 2. Description of the Related Art

Liquid crystal display devices include liquid crystal panels. The liquid crystal panel typically includes a first display panel having pixel electrodes provided therein, a second display panel having a common electrode provided therein, and liquid crystal molecules that are injected between the first display panel and the second display panel, where the liquid crystal molecules have dielectric anisotropy. A voltage is applied to form an electric field between the pixel electrodes and the common electrode, and the strength of the electric field is adjusted to control the amount of light passing through the liquid crystal panel, thereby displaying a desired image. Since the liquid crystal display device is not a self-emission display device, the liquid crystal display device requires a separate light source that emits light to the liquid crystal panel.

In recent years, an LED light source has been used as a light source, and a driving method has been developed which adjusts the duty ratio of an LED current I_LED to correspond to the image displayed. However, this driving method often generates waterfall noise. It has been known that the waterfall noise is generated due to a difference between the voltage of the pixels when the LED light source is turned on and the voltage of the pixels when the LED light source is turned off, even though the pixels of the liquid crystal panel are charged with the same voltage. This problem is described in document US 2007/0262948 A1.

Document US 2007/0115209 A1 discloses a luminance control apparatus for a backlight for a display device in a vehicle having a first transistor and a second transistor connected to the backlight. The first transistor is controlled by pulse-width modulation control, and the second transistor is controlled to supply a low level current at night time and a high level current at daytime. The duty ratio of the first transistor is varied over a full range from 0 percent to 100 percent at the night time, while the duty ratio of the same is varied only in a partial range at the daytime.

Therefore, a liquid crystal display device capable of reducing the waterfall noise to improve display quality is needed.

### SUMMARY OF THE INVENTION

Aspects of the present invention provide a display device with improved display quality.

However, the aspects, features and advantages of the present invention are not restricted to the ones set forth herein. The above and other aspects, features and advantages of the present invention will become more apparent to one of ordinary skill in the art to which the present invention pertains by referencing a detailed description of the present invention given below.

According to an aspect of the present invention, a display device includes: an LED light configured to emit light; a display panel configured to receive the light so as to facilitate display of an image; and a backlight driver adjusting the magnitude and the duty ratio of an LED current I_LED flowing through the LED light source. The waveform of the LED current I_LED includes at least a rising section in which the magnitude of the LED current increases from a turn-off current value to a peak value, and a falling section in which the magnitude of the LED current decreases from the peak value to the turn-off current value. This display device is claimed in claim 1.

### BRIEF DESCRIPTION OF THE DRAWINGS

The above and other aspects and advantages of the present invention will become more apparent by describing in detail exemplary embodiments thereof with reference to the attached drawings, in which:
FIG. 1 is a block diagram illustrating a display device according to exemplary embodiments of the invention;
FIG. 2 is an equivalent circuit diagram illustrating one pixel of a display panel shown in FIG. 1;
FIG. 3 is a block diagram illustrating an image signal controller shown in FIG. 1;
FIG. 4 is a block diagram illustrating a light-emitting block and a backlight driver shown in FIG. 1 according to a first embodiment of the invention;
FIG. 5 is a circuit diagram of FIG. 4;
FIG. 6 is a timing chart illustrating signals shown in FIG. 5;
FIG. 7 is a block diagram illustrating a light-emitting block and a backlight driver according to a second embodiment of the invention;
FIG. 8 is a timing chart illustrating signals shown in FIG. 7;
FIG. 9 is a diagram illustrating the relationship between currents I_LED' and I_LED shown in FIG. 8;
FIG. 10 is a signal diagram illustrating an LED current according to a third embodiment of the invention;
FIG. 11 is a block diagram illustrating a light-emitting block and a backlight driver according to a fourth embodiment of the invention;
FIG. 12 is a circuit diagram of FIG. 11;
FIG. 13 is a timing chart illustrating signals shown in FIG. 12;
FIG. 14 is a block diagram illustrating a light-emitting block and a backlight driver according to a fifth embodiment of the invention;
FIG. 15A is a circuit diagram of FIG. 14;
FIG. 15B is a table illustrating the relationship among the output of a comparator, the resistance value of a variable resistor, and the magnitude of an LED current shown in FIG. 15A;
FIG. 16 is a circuit diagram illustrating a reference voltage generator shown in FIG. 15A;
FIG. 17A is a circuit diagram illustrating the operation of the reference voltage generator in a first mode;
FIG. 17B is a circuit diagram illustrating the operation of the reference voltage generator in a second mode;
FIG. 18 is a timing chart illustrating the signals shown in FIG. 15A according to the fifth embodiment of the invention;
FIG. 19 is a timing chart illustrating the signals shown in FIG. 15A according to a sixth embodiment of the invention; and
FIG. 20 is a timing chart illustrating the signals shown in FIG. 15A according to a seventh embodiment of the invention.

### DETAILED DESCRIPTION OF THE EXEMPLARY EMBODIMENTS

The present invention will now be described more fully with reference to the accompanying drawings, in which exemplary embodiments of the invention are shown. The invention may, however, be embodied in many different forms and should not be construed as being limited to the embodiments set forth herein. Rather, these embodiments are provided so that this disclosure will be thorough and complete, and will fully convey the concept of the invention to those skilled in the art.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Like numbers refer to like elements throughout. As used herein the term "and/or" includes any and all combinations of one or more of the associated listed items.

It will be understood that, although the terms first, second, etc. may be used herein to describe various elements, components, regions, layers and/or sections, these elements, components, regions, layers and/or sections should not be limited by these terms. These terms are only used to distinguish one element, component, region, layer or section from another element, component, region, layer or section. Thus, a first element, component, region, layer or section discussed below could be termed a second element, component, region, layer or section without departing from the teachings of the present invention.

The terminology used herein is for the purpose of describing particular embodiments only and is not intended to be limiting of the invention. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

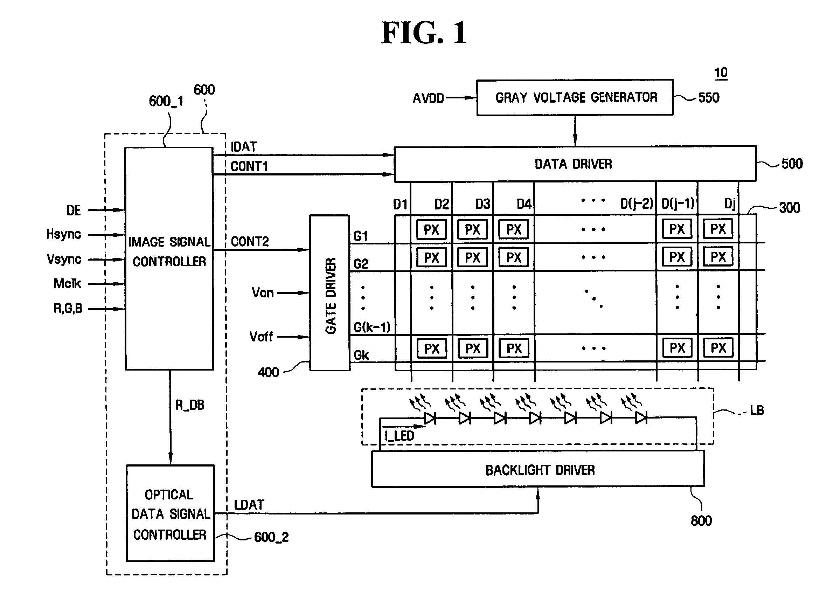

Hereinafter, a display device according to a first embodiment of the invention will be described with reference to FIGS. 1 to 6.

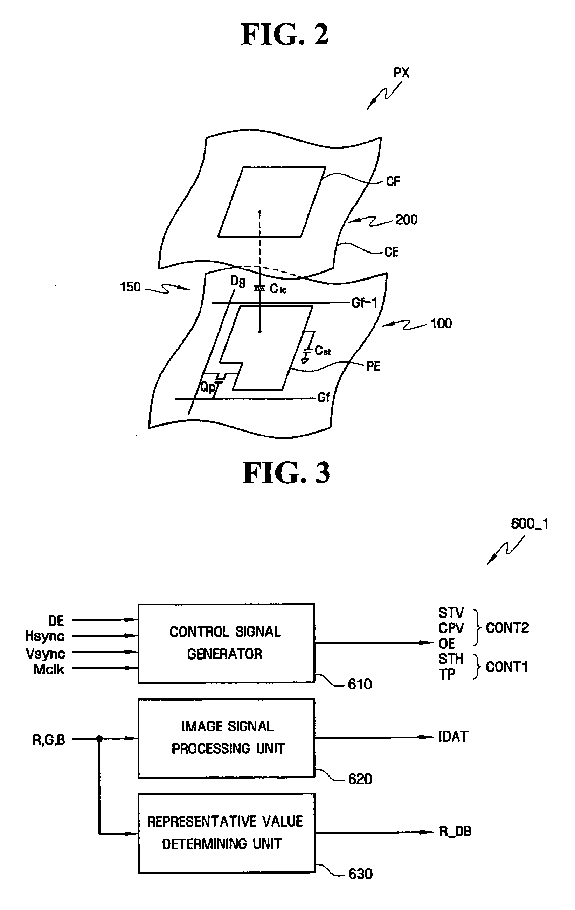

FIG. 1 is a block diagram illustrating a display device according to exemplary embodiments of the invention, and FIG. 2 is an equivalent circuit diagram illustrating one pixel of a display panel shown in FIG. 1. FIG. 3 is a block diagram illustrating an image signal controller shown in FIG. 1.

Referring to FIG. 1, a display device 10 includes a display panel 300, a signal controller 600, a gray voltage generator 550, a gate driver 400, a data driver 500, a backlight driver 800, and a light-emitting block LB connected to the backlight driver 800.

The display panel 300 includes a plurality of gate lines G1 to Gk, a plurality of data lines D1 to Dj, and a plurality of pixels PX. Although not shown in the drawings, the plurality of pixels PX may be classified into red sub-pixels, green sub-pixels, and blue sub-pixels. The pixels PX are defined at intersections of the gate lines and the data lines. The display panel 300 displays an image in response to image data voltages, as described below.

FIG. 2 is an equivalent circuit diagram of one pixel. The pixel PX connected to, for example, an f-th (f = 1 to k) gate line Gf and a g-th (g = 1 to j) data line Dg includes a switching element Qp that is connected to the gate line Gf and the data line Dg, and a liquid crystal capacitor Clc and a storage capacitor Cst that are connected to the switching element. As shown in FIG. 2, the liquid crystal capacitor Clc may be composed of two electrodes, for example, a pixel electrode PE of the first display panel 100 and a common electrode CE of the second display panel 200, and liquid crystal molecules 150 interposed between the two electrodes. Color filters CF are formed in a portion of the common electrode CE.

The switching element Qp may turn the corresponding pixel PX on or off. In particular, the switching element Qp may be an a-Si thin film transistor having an active layer made of amorphous silicon (a-Si). When an LED light source is turned on to emit light, the light may be incident on the active layer of each of the a-Si thin film transistors. When light emitted from the LED light source is incident on the active layer, parasitic capacitance may be generated between the active layer and the pixel electrode PE. Therefore, even though the same amount of charge is stored in the pixel PX of the liquid crystal panel, the voltage of the pixel PX charged when the LED light source is turned on can be lower than that charged when the LED light source was turned off. The resulting visual effect is termed waterfall noise, and reduces the quality of the image generated by the display device 10.

Referring to FIG. 1 again, the signal controller 600 may receive first image signals R, G, and B and external control signals Vsync, Hsync, Mclk, and DE for controlling the display of the first image signals. The signal controller 600 can then output a second image signal IDAT, a data control signal CONT1, a gate control signal CONT2, and an optical data signal LDAT.

Specifically, the signal controller 600 may convert the first image signals R, G, and B into the second image signals IDAT, and output the converted signals. In addition, the signal controller 600 may provide the optical data signal LDAT corresponding to an image displayed by the display panel 300 to the backlight driver 800. The signal controller 600 may provide an optical data signal LDAT whose duty ratio is adjusted to correspond to the image displayed by the display panel 300.

The signal controller 600 may be functionally divided into an image signal controller 600_1 and an optical data signal controller 600_2. The image signal controller 600_1 may control the image displayed by the display panel 300, and the optical data signal controller 600_2 may control the backlight driver 800. The image signal controller 600_1 may be physically separated from the optical data signal controller 600_2, although this need not necessarily be the case.

The image signal controller 600_1 may receive the first image signals R, G, and B and output the second image signals IDAT corresponding thereto. The image signal controller 600_1 may receive external control signals Vsync, Hsync, Mclk, and DE, and generate the data control signal CONT1 and the gate control signal CONT2. Examples of the external control signals include a vertical synchronization signal Vsync, a horizontal synchronization signal Hsync, a main clock signal Mclk, and a data enable signal DE. The data control signal CONT1 is for controlling the operation of the data driver 500, and the gate control signal CONT2 is for controlling the operation of the gate driver 400.

In addition, the image signal controller 600_1 may receive the first image signals R, G, and B, and output corresponding representative image signals R_DB to the optical data signal controller 600_2.

Referring to FIG. 3, the image signal controller 600_1 may include a control signal generator 610, an image signal processing unit 620, and a representative value determining unit 630.

The control signal generator 610 receives the external control signals Vsync, Hsync, Mclk, and DE, and outputs the data control signal CONT1 and the gate control signal CONT2. For example, the control signal generator 610 may output a vertical start signal STV that starts the operation of the gate driver 400, a gate clock signal CPV that determines the output timing of a gate-on voltage, an output enable signal OE that determines the pulse width of the gate-on voltage, a horizontal start signal STH that starts the operation of the data driver 400, and an output instruction signal TP that instructs the output of an image data voltage.

The image signal processing unit 620 may convert the first image signals R, G, and B into the second image signals IDAT and output the converted signals. The second image signals IDAT may be converted from the first image signals R, G, and B in order to improve display quality. The second image signals IDAT may be converted from the first image signals R, G, and B in order to perform, for example, overdriving.

The representative value determining unit 630 determines the representative image signal R_DB of the image displayed by the liquid crystal panel 300. For example, the representative value determining unit 630 may receive the first image signals R, G, and B, and average the received signals, in any manner, to determine the representative image signal R_DB. Therefore, the representative image signal R_DB may correspond to an average brightness of the image displayed by the liquid crystal panel 300.

Referring to FIG. 1 again, the optical data signal controller 600_2 may receive the representative image signal R_DB and provide the optical data signal LDAT to the backlight driver 800. The optical data signal controller 600_2 may provide an optical data signal LDAT whose duty ratio is adjusted to correspond to the image displayed by the display panel 300. For example, the optical data signal controller 600_2 may determine the primitive brightness of a backlight corresponding to the representative image signal R_DB. As one example, the optical data signal controller 600_2 may use a look-up table (not shown) to determine the primitive brightness of the backlight corresponding to the representative image signal R_DB. An optical data signal output unit 650 may then output an optical data signal LDAT having a duty ratio corresponding to the determined primitive brightness of the backlight.

The gray voltage generator 550 may provide to the data driver 500 an image data voltage corresponding to the second image signal IDAT. In particular, the gray voltage generator 550 may distribute a driving voltage AVDD according to the gray level of the second image signal IDAT, and provide the distributed voltage to the data driver 500. In addition, although not shown in the drawings, the gray voltage generator 550 may include a plurality of resistors that are connected in series between ground and a node to which the driving voltage AVDD is applied, so as to distribute the level of the driving voltage AVDD. The internal circuit of the gray voltage generator 550 is not limited by any of the above, but instead may have various internal circuit structures.

The gate driver 400 receives the gate control signal CONT2 from the image signal controller 600_1 and applies gate signals to the gate lines G1 to Gk. The gate signal is composed of a combination of a gate-on voltage Von and a gate-off voltage Voff supplied from a gate-on/off voltage generator (not shown). The gate control signal CONT1 is for controlling the operation of the gate driver 400, and it may include a vertical start signal that starts the operation of the gate driver 500, a gate clock signal that determines the output timing of the gate-on voltage, and an output enable signal that determines the pulse width of the gate-on voltage.

The data driver 500 receives the data control signal CONT1 from the image signal controller 600_1 and applies image data voltages to the data lines D1 to Dj. The image data voltage may be supplied from the gray voltage generator 550. That is, the image data voltage may be distributed from the driving voltage AVDD according to the gray level of the second image signal IDAT. The data control signal CONT1 is for controlling the operation of the data driver 500. The signals for controlling the operation of the data driver 500 may include a horizontal start signal that starts the operation of the data driver 500 and an output instruction signal that instructs the output of the image data voltage.

The backlight driver 800 may adjust the brightness of light emitted from the light-emitting block LB in response to the optical data signal LDAT. The backlight driver 800 may receive the optical data signal LDAT from the signal controller 600, and adjust the duty ratio and the amount of LED current I_LED flowing through the LED light source, thereby controlling the brightness of light emitted from the LED light source. In addition, the backlight driver 800 may supply an LED current I_LED whose duty ratio is adjusted to correspond to the duty ratio of the optical data signal LDAT. However, as described above, the optical data signal LDAT has a duty ratio corresponding to the image displayed by the display panel 300. Therefore, the backlight driver can adjust the duty ratio of the LED current I_LED to correspond to the image displayed by the display panel 300.

The internal structure and the function of the backlight driver 800 will be described in the following embodiments.

The light-emitting block LB includes one or more LED light sources, and emits light to the display panel 300. The brightness of light emitted from the light-emitting block LB may be controlled by the backlight driver 800.

The waveform of the LED current I_LED flowing through the LED light source may include at least one of a rising section and a falling section. In the rising section, the magnitude of the LED current I_LED can be monotonically increased from a turn-off current value to a peak value. In the falling section, the magnitude of the LED current I_LED can be monotonically decreased from the peak value to the turn-off current value. The LED current I_LED may have a waveform including a turn-off section and a turn-on section that are alternately repeated. In the turn-off section, the LED current I_LED may have the turn-off current value, and the turn-on section may include at least one of the rising section and the falling section. The waveform of the LED current I_LED will be described in detail in the following embodiments.

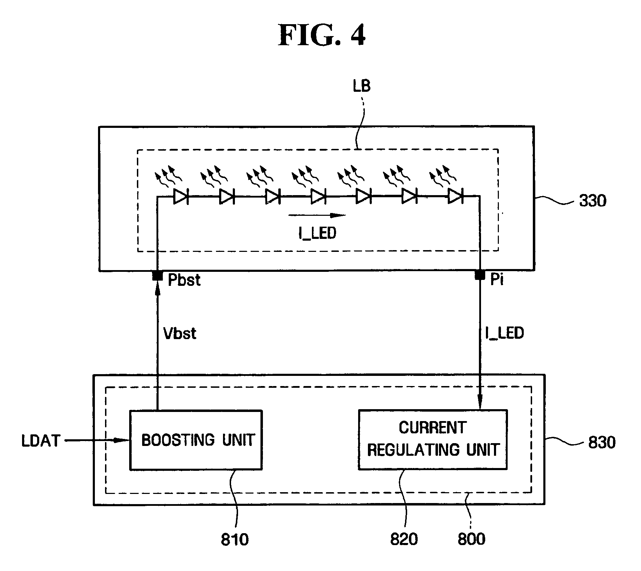

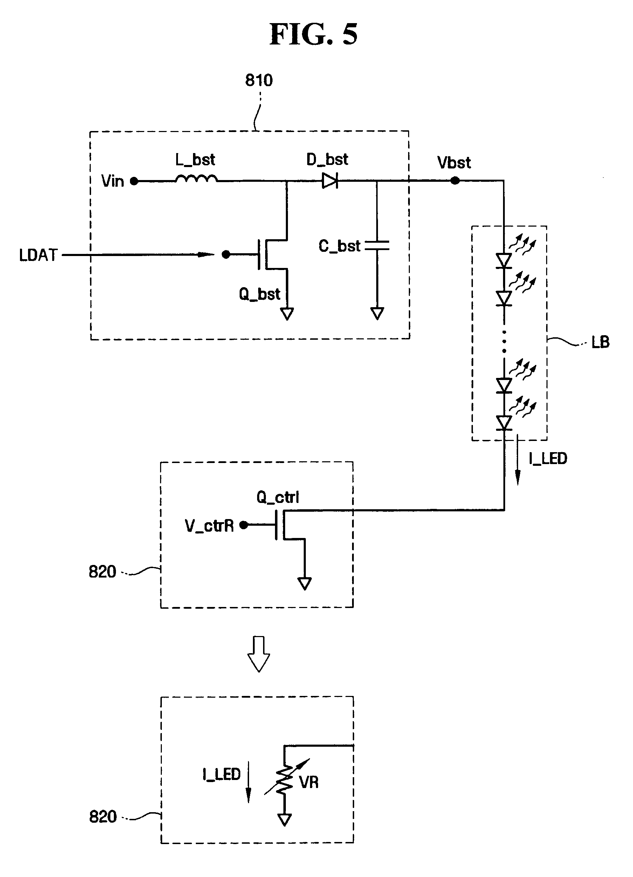

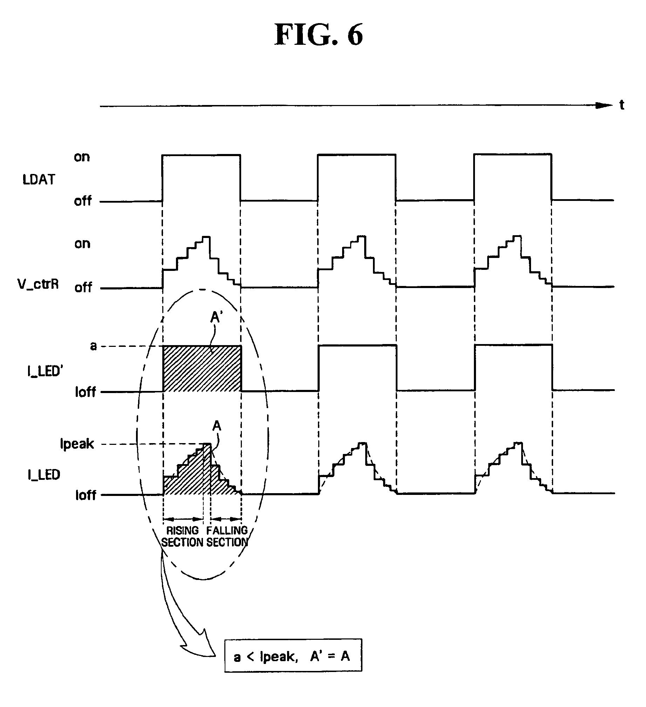

FIG. 4 is a block diagram illustrating the light-emitting block and the backlight driver shown in FIG. 1 according to the first embodiment of the invention, and FIG. 5 is a circuit diagram of FIG. 4. FIG. 6 is a timing chart illustrating the signals shown in FIG. 5.

Referring to FIG. 4, the backlight driver 800 may include a boosting unit 810 that supplies a boosting voltage Vbst to the LED light source, and a current regulating unit 820 that regulates the magnitude of the LED current I_LED flowing through the LED light source.

As shown in FIG. 4, the LED light source may be provided by an LED light source module 330, and the boosting unit 810 and the current regulating unit 820 may be mounted on a converter board 830. The LED light source module 330 may be provided on the rear surface of the display panel 300, and the converter board 830 may be connected to the LED light source module 330. The boosting unit 810 may supply the boosting voltage Vbst to the LED light source through a boosting voltage terminal Pbst of the LED light source module 330, and the current regulating unit 820 may regulate the magnitude of the LED current I_LED flowing through the light-emitting block BL through an LED current terminal Pi.

The boosting voltage Vbst may be applied to one end of the LED light source, and the current regulating unit 820 may include a thin film transistor (see Q_ctrl in FIG. 5) having drain/source terminals connected to the other end of the LED light source. The thin film transistor may regulate the magnitude of the LED current I_LED in response to a control voltage (e.g., V_ctrR in FIG. 5).

Referring to FIGS. 5 and 6, the boosting unit 810 may supply the boosting voltage Vbst in response to the optical data signal LDAT (whose duty ratio has been adjusted). As shown in FIG. 5, the boosting unit 810 may be, for example, a boost converter. The boost converter includes an inductor L_bst, a diode D_bst, a capacitor C_bst, and a switching element Q_bst. The boost converter may receive the optical data signal LDAT and boost an input voltage Vin to supply the boosting voltage Vbst required to operate a light-emitting diode (LED).

Next, the operation of the boosting unit 810 will be described. When the optical data signal LDAT is at a high level (an on level in FIG. 6), the switching element Q_bst is turned on, and a current flowing through the inductor L_bst is gradually increased, thus increasing the voltage across the inductor. When the optical data signal LDAT is at a low level (an off level in FIG. 6), the switching element Q_bst is turned off. In this case all current flowing through the inductor L_bst flows through the diode D_bst, charging the capacitor C_bst. Therefore, the input voltage Vin is boosted to a predetermined level. The amount of current flowing through the inductor L_bst varies depending on the duty ratio of the optical data signal LDAT, which results in a variation in the level of the boosting voltage Vbst.

The current regulating unit 820 may include a current regulating transistor Q_ctrl that regulates the magnitude of the LED current I_LED. In the current regulating transistor Q_ctrI, current flowing between drain and source may vary depending on a control voltage, that is, the voltage V_ctrR applied to the gate terminal. That is, the current regulating transistor Q_ctrl may serve as a variable resistor VR that is controlled by a voltage V_ctrR applied to the gate terminal. The magnitude of the LED current I_LED may be regulated according to a variation in the resistance value of the variable resistor VR.

The voltage V_ctrR applied to the gate terminal, which can be a control voltage, may have the waveform shown in FIG. 6. The voltage V_ctrR applied to the gate terminal may include a rising section and a falling section. In the rising section, the voltage V_ctrR applied to the gate terminal may be increased stepwise. In the falling section, the voltage V_ctrR may be decreased stepwise. The LED current I_LED may have a waveform corresponding to the waveform of the voltage V_ctrR applied to the gate terminal. That is, the magnitude of the LED current I_LED may be increased stepwise and then decreased stepwise, as shown in FIG. 6.

Specifically, in the rising section, the magnitude of the LED current I_LED may be increased stepwise. In this case, as the magnitude of the LED current I_LED is increased, the rate of increase of the magnitude of the LED current I_LED may be gradually reduced. In the falling section, the magnitude of the LED current I_LED may be decreased stepwise. As the magnitude of the LED current I_LED is decreased, the rate of decrease of the magnitude of the LED current I_LED may be gradually reduced. As such, the backlight driver 800 may regulate the magnitude of the LED current I_LED such that the waveform of the LED current I_LED is similar to that of a CCFL current.

The duty ratio of the LED current I_LED may be determined by the duty ratio of the optical data signal LDAT. That is, the backlight driver 800 may output an LED current I_LED having substantially the same duty ratio as that of the optical data signal LDAT.

In FIG. 6,I_LED' indicates the waveform of the LED current I_LED that is not regulated by the current regulating unit 820. As shown in FIG. 6, the current I_LED' may have a square waveform. The current I_LED' includes a rising edge and a falling edge, and the magnitude of the current I_LED' rapidly varies between the turn-off level and the turn-on level. However, as described above with reference to FIG. 2, when the LED light source is turned on to emit light, the light may be incident on the active layer of each of the a-Si thin film transistors. When the light emitted from the LED light source is incident on the active layer, parasitic capacitance may be generated between the active layer and the pixel electrode PE.

Therefore, if the magnitude of the LED current I_LED rapidly varies between the turn-off level and the turn-on level like the current I_LED', the brightness of light emitted from the LED light source also rapidly varies between the turn-off level and the turn-on level. As a result, the parasitic capacitance also rapidly varies, resulting in large waterfall noise.

The waveform of the LED current I_LED includes a rising section and a falling section. In the rising section, the magnitude of the LED current I_LED is gradually increased from the turn-off current value to the peak value. In the falling section, the magnitude of the LED current I_LED is gradually decreased from the peak value to the turn-off current value. Therefore, the magnitude of the parasitic capacitance varies more gradually, thus reducing waterfall noise. This improves the display quality of the display device 10.

When a square-wave current flows through the LED light source, the backlight driver 800 regulates the magnitude of the LED current I_LED such that the amount of the LED current I_LED is substantially equal to the amount of current I_LED'. Referring to FIG. 6, the turn-on section is identical to the section in which the optical data signal is at a high level. However, in the turn-on section, the peak value of the current I_LED' is greater than the peak value Ipeak of the LED current I_LED. Therefore, it is possible to make an area A', corresponding to an amount of the current I_LED', substantially equal to an area A, corresponding to an amount of the LED current I_LED. In this way, it is possible to maintain the amount of the LED current I_LED to be substantially constant even though the waveform of the LED current I_LED varies.

It should be noted that the invention is not limited to the I_LED waveform described above in connection with FIG. 6. For example, the waveform of the LED current I_LED may include only the rising section or only the falling section.

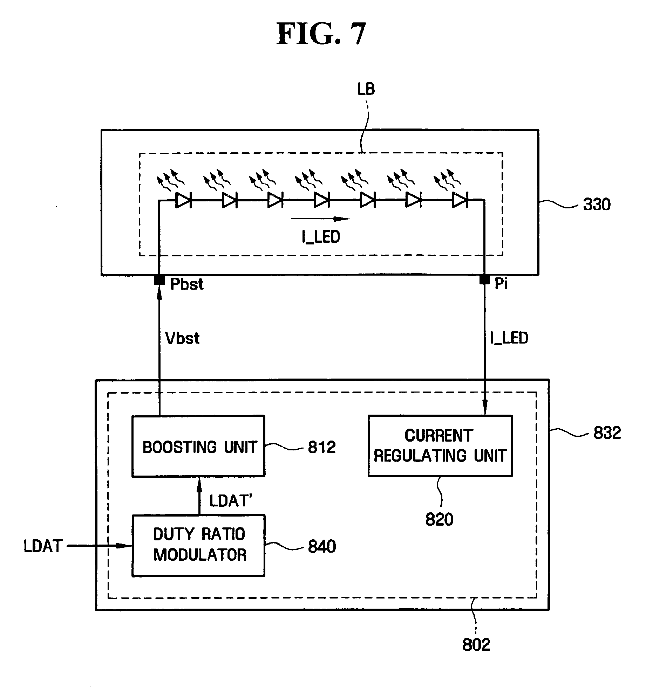

Next, a display device according to a second embodiment of the invention will be described with reference to FIGS. 7 to 9. In the second embodiment, the same components as those in the first embodiment are denoted by the same reference numerals, and a description thereof will be omitted for clarity.

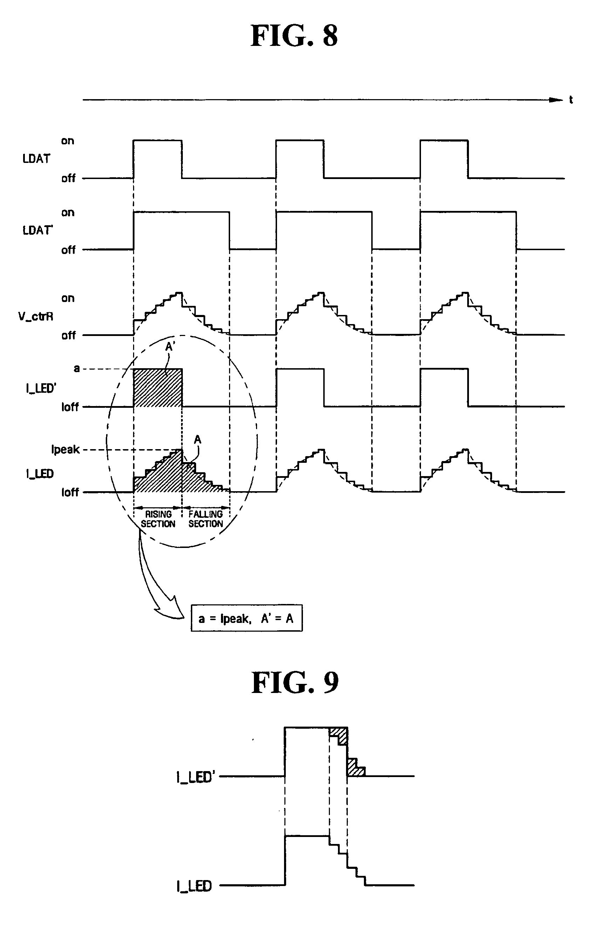

FIG. 7 is a block diagram illustrating a light-emitting block and a backlight driver according to the second embodiment of the invention, and FIG. 8 is a timing chart illustrating the signals shown in FIG. 7. FIG. 9 is a diagram illustrating the relationship between the currents I_LED' and I_LED shown in FIG. 8.

Referring to FIG. 7, a backlight driver 802 may include a duty ratio modulator 840 that modulates the duty ratio of the optical data signal LDAT, a boosting unit 812 that supplies the boosting voltage Vbst to an LED light source, and a current regulating unit 820 that regulates the magnitude of the LED current I_LED flowing through the LED light source. As shown in FIG. 7, the LED light source may be provided in the LED light source module 330, and the duty ratio modulator 840, the boosting unit 812, and the current regulating unit 820 may be mounted on a converter board 832.

The duty ratio modulator 840 may modulate the duty ratio of the optical data signal LDAT and output an optical data signal LDAT' that has a modulated duty ratio. As shown in FIG. 8, the duty ratio modulator 840 may output the optical data signal LDAT' having a duty ratio that is higher than that of the optical data signal LDAT.

The voltage V_ctrR applied to the gate terminal, which is a control voltage, may have the waveform shown in FIG. 8. The voltage V_ctrR applied to the gate terminal may include a rising section and a falling section. In the rising section, the voltage V_ctrR applied to the gate terminal may be increased stepwise. In the falling section, the voltage V_ctrR may be decreased stepwise. The LED current I_LED will have a waveform corresponding to the waveform of the voltage V_ctrR applied to the gate terminal. That is, as the V_ctR signal controls the I_LED signal, the I_LED signal will have a profile similar to that of the V_ctR signal, e.g., the profile shown in FIG. 8.

Referring to FIG. 8, the waveform of the LED current I_LED may include a rising section in the section in which the optical data signal LDAT is at a level corresponding to "on," and may include a falling section in the section in which LDAT is at a level corresponding to "off." Specifically, the magnitude of the LED current I_LED may be increased stepwise in the section in which the optical data signal LDAT is at the on level. In this case, as the magnitude of the LED current I_LED is increased, the rate of increase of the LED current I_LED may be gradually reduced. In the section in which the optical data signal LDAT is at the off level, the magnitude of the LED current I_LED may be decreased stepwise. In this case, as the magnitude of the LED current I_LED is decreased, the rate of decrease of the magnitude of the LED current I_LED may be gradually reduced. As such, the backlight driver 802 may regulate the magnitude of the LED current I_LED such that the waveform of the LED current I_LED is similar to that of a CCFL current, and output the regulated current.

Meanwhile, unlike the first embodiment, the duty ratio of the LED current I_LED may be determined by the modulated duty ratio of the optical data signal LDAT'. That is, the backlight driver 802 may output an LED current I_LED having the same duty ratio as the modulated duty ratio of the optical data signal LDAT'.

According to the display device of the second embodiment of the invention, similar to the first embodiment, the waveform of the LED current I_LED includes a rising section and a falling section. Therefore, when the LED light source is turned on and then turned off, the magnitude of the parasitic capacitance varies more gradually, thus reducing waterfall noise and improving image quality.

When a square-wave current flows through the LED light source, the backlight driver 802 regulates the magnitude of the LED current I_LED such that the amount of the LED current I_LED is substantially equal to the amount of the current I_LED'. Referring to FIG. 8, the duty ratio of the ED current I_LED is the same as the modulated duty ratio of the optical data signal LDAT'. That is, the duty ratio of the ED current I_LED is higher than that of the optical data signal LDAT. Therefore, it is possible to make an area A', corresponding to the amount of the current I_LED', substantially equal to an area A corresponding to the amount of the LED current I_LED, even though the peak value a of the current I_LED' is equal to the peak value Ipeak of the LED current I_LED. Referring to FIG. 9, it is possible to change the waveform of the LED current I_LED while keeping the amount of current I_LED' substantially equal to the amount of current I_LED. This is done by shifting a portion of the waveform of the current I_LED' before the falling edge to the falling edge. In this way, it is possible to keep the amount of the LED current I_LED substantially constant even though the waveform of the LED current I_LED varies.

The invention does not limit the LED current I_LED to the waveforms of FIG. 8 For example, the waveform of the LED current I_LED may include at least one of the rising section and the falling section. That is, the waveform of the LED current I_LED may include only the rising section or only the falling section.

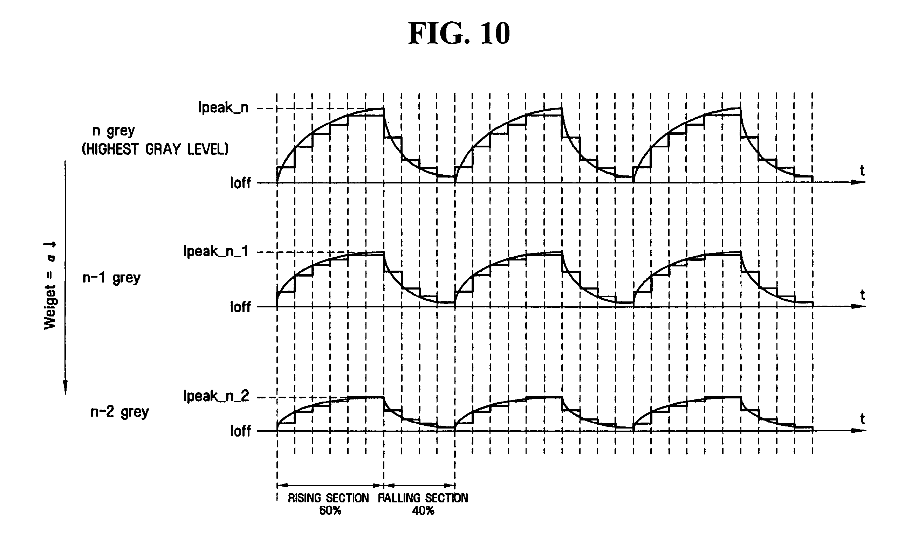

Next, a display device according to a third embodiment of the invention will be described with reference to FIG. 10. In the third embodiment, the same components as those in the second embodiment are denoted by the same reference numerals, and a description thereof is omitted.

FIG. 10 is a signal diagram illustrating an LED current according to the third embodiment of the invention. Referring to FIG. 10, the waveform of the LED current I_LED may include a rising section and a falling section that are alternately repeated at a predetermined duty ratio. The predetermined duty ratio may be substantially equal to that of a CCEL current waveform. For example, as shown in FIG. 10, the rising section may be about 60% of one period, and the falling section may be about 40% of one period. That is, the waveform of the LED current I_LED may have a predetermined duty ratio, regardless of the duty ratio of the optical data signal LDAT.

The LED current I_LED may have a peak value that is given a weight according to the gray level of the image displayed by the display panel 300. If an n gray level is the highest gray level of the image displayed, the LED current I_LED may have a peak value ipeak_n. When the grayscale level is reduced, a small weight α may be given, where the value of I_LED is scaled according to the value of α. That is, gray levels below n can be assigned α values between 0 and 1, and I_LED can be multiplied by this α value so as to scale down with reduced gray level. Thus, with reference to FIG. 10, as gray level drops from n to n-1 to n-2, I_LED is also scaled down from ipeak_n to ipeak_n_1 to ipeak_n_2. In this manner, even though I_LED has a predetermined duty ratio regardless of the duty ratio of the optical data signal LDAT, it is possible to adjust the peak value of I_LED such that the brightness of light emitted from the LED light source is tailored to the image displayed by the display panel 300.

According to the display device of the third embodiment of the invention, similar to the second embodiment, the I_LED waveform includes rising and falling sections. Therefore, when the LED light source is turned on and then turned off, the magnitude of the parasitic capacitance varies more gradually, thus reducing waterfall noise and improving display quality. In addition, when a square-wave current flows through the LED light source, the backlight driver 802 regulates the magnitude of the LED current I_LED such that the amount of LED current I_LED is substantially equal to the amount of current I_LED'.

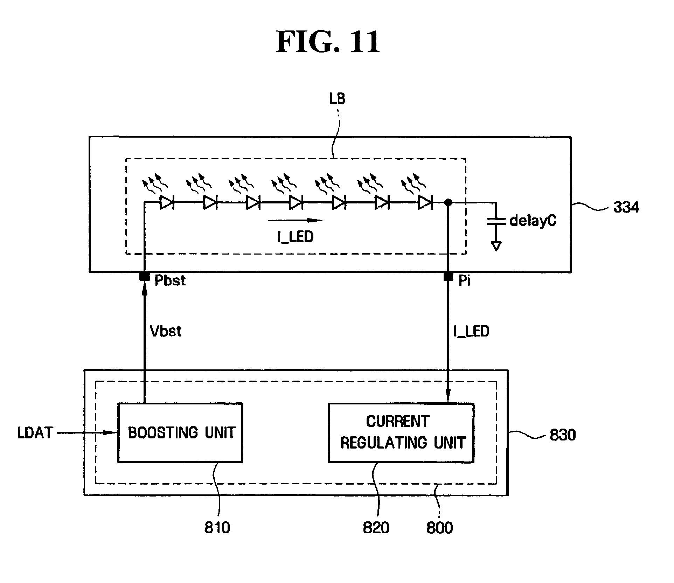

Next, a display device according to a fourth embodiment of the invention will be described with reference to FIGS. 11 to 13. In the fourth embodiment, the same components as those in the first embodiment are denoted by the same reference numerals, and a description thereof will be omitted.

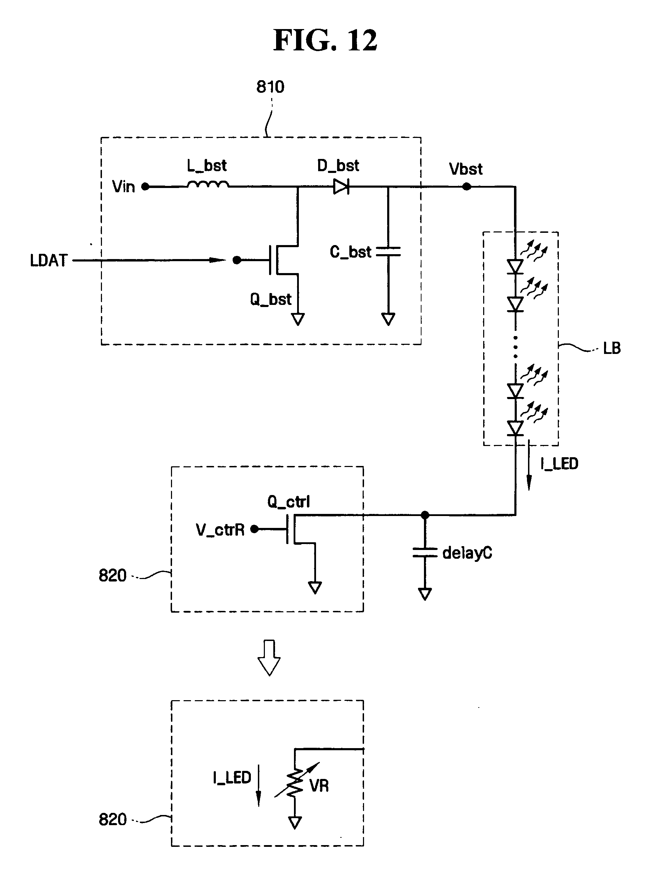

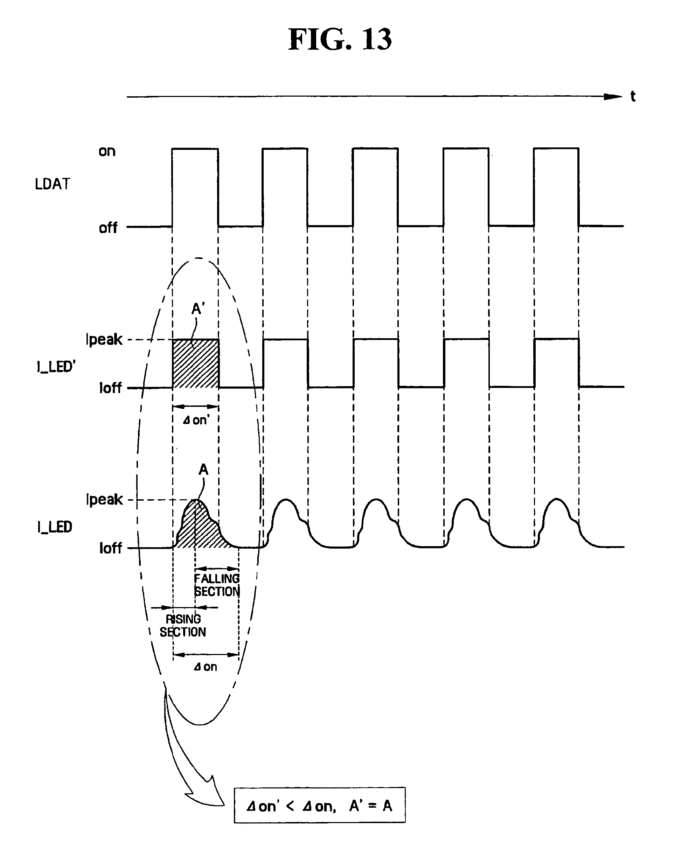

FIG. 11 is a block diagram illustrating a light-emitting block and a backlight driver according to the fourth embodiment of the invention, and FIG. 12 is a circuit diagram of FIG. 11. FIG. 13 is a timing chart illustrating the signals shown in FIG. 12.

Referring to FIG. 11, a display device according to the fourth embodiment of the invention may further include a delay capacitor delayC that is connected to the other end of the LED light source. The backlight driver 800 may include a boosting unit 810 that supplies a boosting voltage Vbst to the LED light source, and a current regulating unit 820 that regulates the magnitude of the LED current I_LED flowing through the LED light source.

As shown in FIG. 11, the LED light source may be provided in an LED light source module 334, and the boosting unit 810 and the current regulating unit 820 may be mounted on a converter board 830. The LED light source module 334 may be provided on the rear surface of the display panel 300, and the converter board 830 may be connected to the LED light source module 334. The boosting unit 810 may supply the boosting voltage Vbst to the LED light source through a boosting voltage terminal Pbst of the LED light source module 334, and the current regulating unit 820 may regulate the magnitude of the LED current I_LED.

The delay capacitor delayC may be mounted on the LED light source module 334 or the converter board 830. In particular, the delay capacitor delayC may be mounted on the LED light source module 334. When the delay capacitor delayC is mounted on the LED light source module 334, it is possible to mount the delay capacitor delayC without changing the circuit structure of the converter board 830. In addition, it is possible to reduce audible noise generated when the delay capacitor delayC is mounted on the converter board 830. The converter board 830 may alternately generate positive and negative signals. When these signals are adjacent to the delay capacitor delayC, audible noise may be generated. In particular, when a multi-layer ceramic capacitor (MLCC) is used as the delay capacitor delayC, the amount of audible noise can increase substantially.

Referring to FIG. 12, the boosting voltage Vbst may be applied to one end of the LED light source, and the current regulating unit 820 may include a thin film transistor Q_ctrl having drain/source terminals connected to the other end of the LED light source. The thin film transistor Q_ctrl may regulate the magnitude of the LED current I_LED in response to a control voltage V_ctrR.

This latter circuit can be considered as equivalent to the delay capacitor delayC and a variable resistor VR, connected in parallel. Therefore, as shown in FIG. 13, it is possible to generate an LED current I_LED with a transition section that is determined by a time constant, where this time constant is the product of the delay capacitor delayC and the variable resistor VR. Since the transition sections are a rising section and a falling section, the LED current I_LED may include a rising section and a falling section.

In FIG. 13, I_LED' indicates the waveform of LED current I_LED' when the delay capacitor delayC is not provided. When the delay capacitor delayC is not provided, the LED current I_LED' can have a square waveform. However, a primary circuit including the delay capacitor delayC and the variable resistor VR causes the amount of current flowing through the LED light source to be substantially equal to the amount of current when the square wave flows, even though a signal includes a transient section, when energy loss due to the variable resistor VR is neglected

According to the display device 10 of the fourth embodiment of the invention, similar to the first embodiment, the waveform of the LED current I_LED includes a rising section and a falling section. Therefore, when the LED light source is turned on and then turned off, the magnitude of the parasitic capacitance varies more gradually, thus reducing waterfall noise. This improves the display quality of the display device 10.

When a square-wave current flows through the LED light source, the backlight driver 800 regulates the magnitude of the LED current I_LED such that the amount of the LED current I_LED is substantially equal to the amount of the LED current I_LED'.

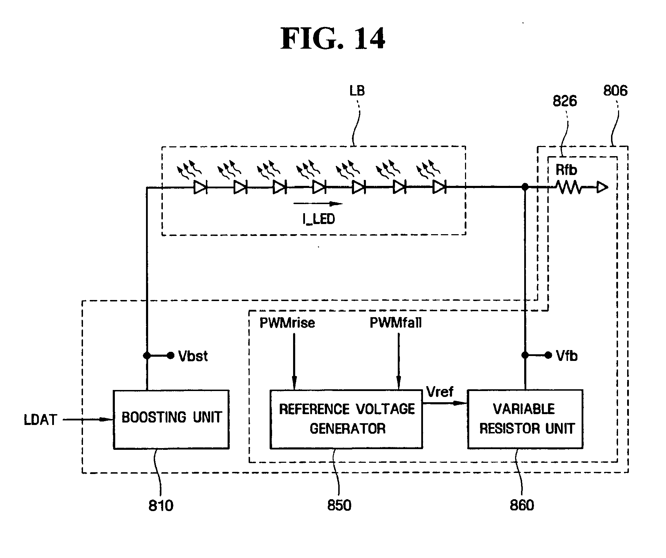

Next, display devices 10 according to fifth to the seventh embodiments of the invention will be described with reference to FIGS. 14 to 18. In the fifth to seventh embodiments, the same components as those in the first embodiment are denoted by the same reference numerals, and a description thereof will be omitted.

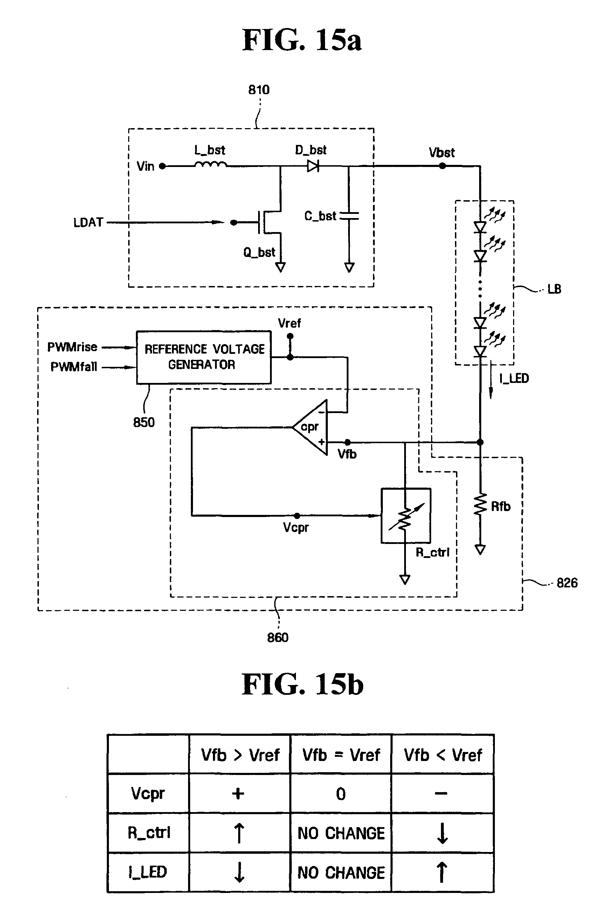

FIG. 14 is a block diagram illustrating a light-emitting block and a backlight driver according to the fifth embodiment of the invention. FIG. 15A is a circuit diagram of FIG. 14, and FIG. 15B is a table illustrating the relationship among the output of a comparator, the resistance value of a variable resistor, and the magnitude of an LED current I_LED shown in FIG. 15A.

Referring to FIGS. 14 to 15B, a backlight driver 806 may include a boosting unit 810 that supplies a boosting voltage Vbst to an LED light source, and a current regulating unit 826 that regulates the magnitude of the LED current I_LED flowing through the LED light source.

The boosting voltage Vbst is applied to one end of the LED light source. The current regulating unit 826 is supplied with a feedback voltage Vfb that is proportional to the magnitude of the LED current I_LED. The current regulating unit 826 compares the feedback voltage Vfb with a reference voltage Vref, and regulates the magnitude of the LED current I_LED according to the comparison.

The current regulating unit 826 may include a feedback resistor Rf, a reference voltage generator 850, and a variable resistor unit 860.

The feedback resistor Rf detects the magnitude of the LED current I_LED flowing through the LED light source in the form of the feedback voltage Vfb.

The reference voltage generator 850 may receive control signals PWMrise and PWMfall, and output a corresponding reference voltage Vref. The reference voltage generator 850 may generate a reference voltage Vref having at least one of a transient section corresponding to a rising section and a transient section corresponding to a falling section. As will be described below, the fifth embodiment may include only the rising section, and the sixth embodiment may include the rising section and the falling section. The seventh embodiment may include at least a two-stage falling section. However, it should be noted that the invention can include various reference voltages Vref having any combination of these rising and falling sections.

The variable resistor unit 860 has a resistance value that varies according to the reference voltage Vref. The variable resistor unit 860 may include a comparator cpr that compares the feedback voltage Vfb with the reference voltage Vref, and a variable resistor R_ctrl having a resistance value that varies depending on an output voltage Vcpr of the comparator cpr. The resistance value of the variable resistor R_ctrl is increased for a positive output voltage Vcpr, and is decreased for a negative output voltage Vcpr. When the level of the output voltage Vcpr is zero, the resistance value of the variable resistor R_ctrl is not changed.

As shown in FIG. 15B, if the feedback voltage Vfb is higher than the reference voltage Vref, the comparator cpr outputs a positive output voltage Vcpr. The resistance value R_ctrl of the variable resistor unit 860 is then increased to correspond to the positive output voltage Vcpr, which decreases the magnitude of the LED current I_LED. If the feedback voltage Vfb is lower than the reference voltage Vref, the comparator cpr outputs a negative output voltage Vcpr. When the resistance value R_ctrl of the variable resistor unit 860 is decreased to correspond to the negative output voltage Vcpr, the magnitude of the LED current I_LED is increased. If the feedback voltage Vfb is equal to the reference voltage Vref, the comparator cpr outputs a zero-level output voltage Vcpr, and the resistance value R_ctrl of the variable resistor unit 860 is maintained without any change. As a result, the magnitude of the LED current I_LED is maintained without any change. In this manner, reference voltage Vref is adjusted so as to regulate the magnitude of the LED current I_LED.

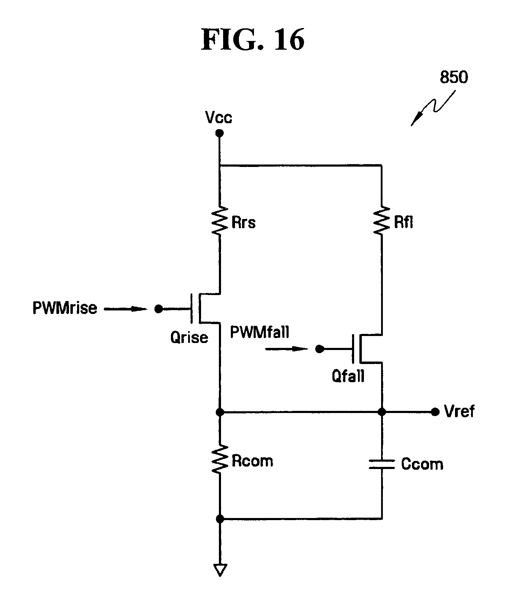

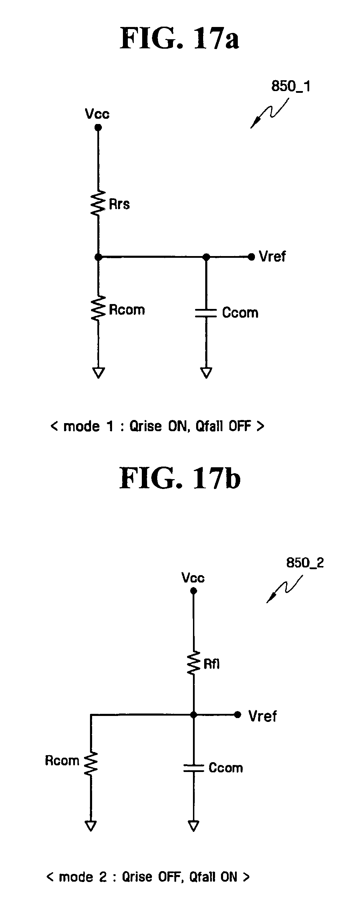

FIG. 16 is a circuit diagram illustrating the reference voltage generator shown in FIG. 15A. FIG. 17A is a circuit diagram illustrating the operation of the reference voltage generator in a first mode, and FIG. 17B is a circuit diagram illustrating the operation of the reference voltage generator in a second mode.

Referring to FIG. 16, the reference voltage generator 850 may include a first resistor Rrs having one end to which a first DC voltage Vcc is applied, a first transistor Qrise having a first drain/source connected to the other end of the first resistor Rrs, and a first RC circuit (Rcom and Ccom) connected to the second drain/source of Qrise. In addition, the reference voltage generator 850 may further include a second resistor Rfl and second transistor Qfall. Here, the resistor RF1 has one end to which the first DC voltage Vcc is applied, and has a resistance value different from that of the first resistor Rrs. The second transistor Qfall is connected between the other end of the second resistor Rfl and the second drain/source of the first transistor Qrise.

In the first mode (mode 1) in which the first transistor Qrise is turned on and the second transistor Qfall is turned off, the reference voltage generator 850 may output a reference voltage Vref with a first time response waveform which has a first time constant and has a peak value as a final value. In the second mode (mode 2) in which the first transistor Qrise is turned off and the second transistor Qfall is turned on, the reference voltage generator 850 may output a reference voltage Vref with a second time response waveform which has a second time constant smaller than the first time constant.

The above will be described in detail with reference to FIGS. 17A and FIG. 17B. In the following description, it is assumed that the first DC voltage Vcc is 5 V, the first resistor Rrs, the second resistor Rfl, and a common resistor Rcom have resistance values of 15 kΩ, 5 kΩ, and 4.3 kΩ, respectively, and the capacitance of a common capacitor Ccom is 33 Nf.

In the first mode (mode 1), that is, when the first transistor Qrise is turned on and the second transistor Qfall is turned off, the circuit shown in FIG. 16 may be equivalent to the circuit shown in FIG. 17A. In the first mode (mode 1), the first time constant is determined a 15 kΩ resistor, 4.3 kΩ resistor and 33 Nf capacitor, and the final value of Vref is approximately 1.11 V. That is, the second time response waveform has the first constant and is increased from a turn-off current to a voltage of 1.11 V.

In the second mode (mode 2), that is, when the first transistor Qrise is turned off and the second transistor Qfall is turned on, the circuit shown in FIG. 16 may be equivalent to the circuit shown in FIG. 17B. In the second mode (mode 2), the second time constant is determined a 5 kΩ, 4.3 kΩ resistor and 33 Nf capacitor, and the final value of Vref is approximately 0.39 VThat is, the second time response waveform has the second constant and is decreased from an initial value to a voltage of 0.39 V.

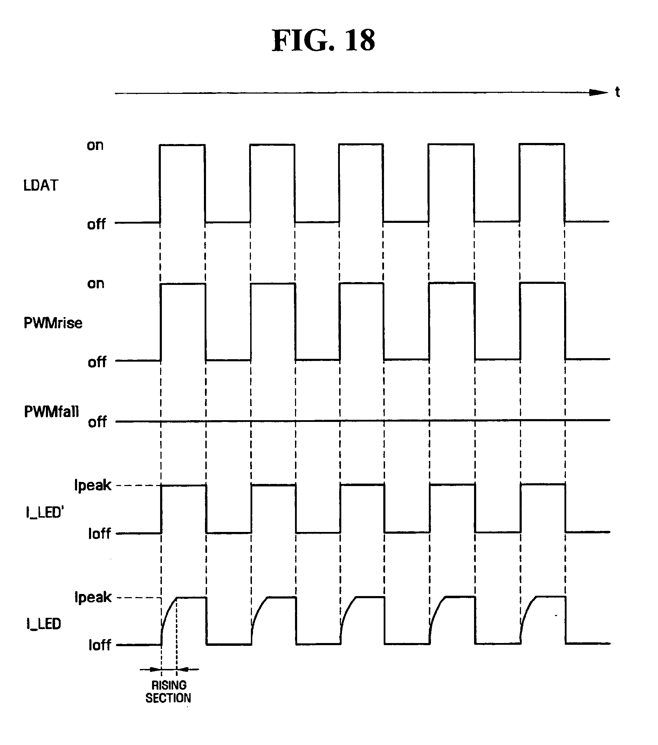

FIG. 18 is a timing chart illustrating the signals shown in FIG. 15A according to the fifth embodiment of the invention.

Referring to FIG. 18, the waveform of the LED current I_LED may include a rising section, and a falling edge where the magnitude of the LED current I_LED is decreased from the peak value to the turn-off value.

The waveforms of the control signals PWMrise and PWMfall will be described below. When the optical data signal LDAT is at a high level, control signal PWMrise is maintained at a turn-on level and the control signal PWMfall is maintained at a turn-off level. Therefore, when the optical data signal LDAT is high, the reference voltage generator 850 is operated in the first mode (mode 1). In the first mode (mode 1), the rising section of the LED current I_LED corresponds to the time period in which the reference voltage generator 850 outputs the first time response waveform. When the first time response waveform reaches the peak value, the LED current I_LED is maintained at the peak value. Then, when the control signal PWMrise is at the turn-off level, the LED current I_LED is rapidly decreased from the turn-off current value.

According to the display device 10 of the fifth embodiment of the invention, the waveform of the LED current I_LED includes a rising section and a falling section. Therefore, when the LED light source is turned off and then turned on, for the same reason as that in the first embodiment, the magnitude of the parasitic capacitance varies more gradually, so as to reduce waterfall noise.

When a square-wave current flows through the LED light source, the backlight driver 806 regulates the magnitude of the LED current I_LED such that the amount of the LED current I_LED is substantially equal to the amount of the current I_LED'.

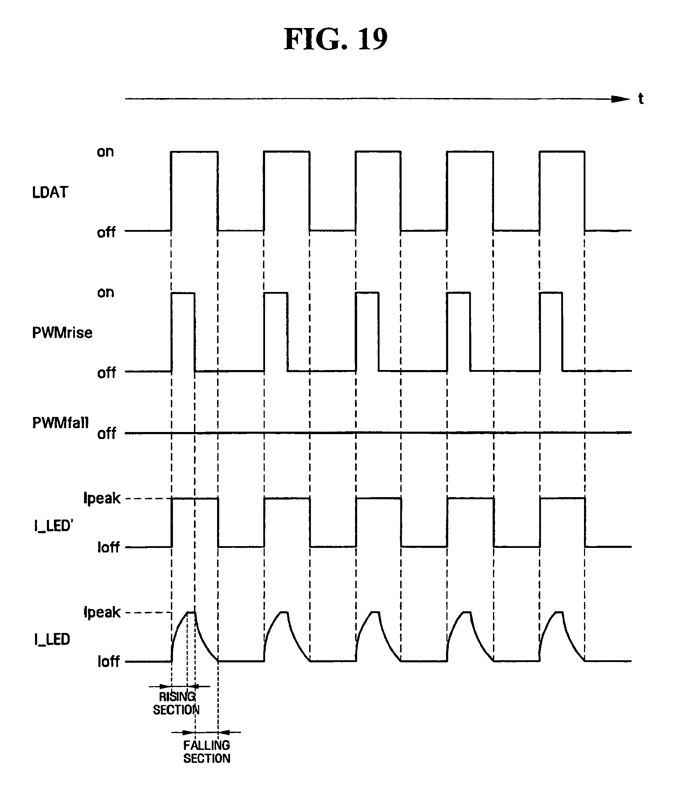

FIG. 19 is a timing chart illustrating the signals shown in FIG. 15A according to the sixth embodiment of the invention.

Referring to FIG. 19, the waveform of the LED current I_LED may include a rising section and a falling section.

The waveforms of the control signals PWMrise and PWMfall will be described below. The control signal PWMrise has a turn-on level during only the first half of periods in which the optical data signal LDAT is at a high level, and the control signal PWMfall has a turn-off level at all times. Therefore, in the section in which the optical data signal LDAT is at the high level and the control signal PWMrise is at the turn-on level, the reference voltage generator 850 is operated in the first mode (mode 1). In the first mode (mode 1), the rising section of the LED current I_LED corresponds to the section in which the reference voltage generator 850 outputs the first time response waveform. When the first time response waveform reaches the peak value, the LED current I_LED is maintained at the peak value. Then, when the optical data signal LDAT is at the high level and the control signal PWMrise is at the turn-off level, both the first transistor and the second transistor are turned off. Therefore, the waveform of the LED current I_LED is attenuated according to the time constant determined by the first RC circuit (Rcom and Ccom). The attenuation section is the falling section.

According to the display device 10 of the sixth embodiment of the invention, the waveform of the LED current I_LED includes the rising section and the falling section. Therefore, when the LED light source is turned off and then turned on, and when the LED light source is turned on and then turned off, for the same reason as that in the first embodiment, the magnitude of the parasitic capacitance varies more gradually, thus reducing waterfall noise.

When a square-wave current flows through the LED light source, the backlight driver 806 regulates the magnitude of the LED current I_LED such that the amount of the LED current I_LED is substantially equal to the amount of the current I_LED'.

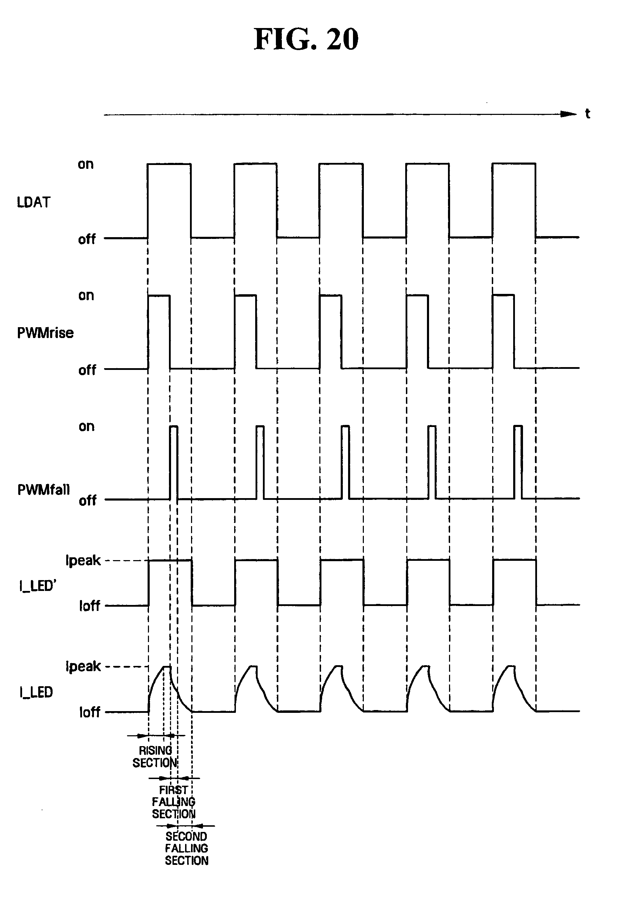

FIG. 20 is a timing chart illustrating the signals shown in FIG. 15A according to the seventh embodiment of the invention.

Referring to FIG. 20, the waveform of the LED current I_LED may include a rising section and a falling section. The falling section may include a first falling section having a first time constant and a second falling section having a second time constant. The first time constant may be smaller than the second time constant.

The waveforms of the control signals PWMrise and PWMfall will be described below. The control signal PWMrise has a turn-on level during only the first half of the section in which the optical data signal LDAT is at a high level, and the control signal PWMfall has a turn-off level for a predetermined period of time after the control signal PWMrise is changed from the turn-on level to the turn-off level.

Therefore, in the section in which the optical data signal LDAT is at the high level and the control signal PWMrise is at the turn-on level, the first transistor is turned on and the second transistor is turned off. The reference voltage generator 850 is thus operated in the first mode (mode 1). In the first mode (mode 1), the rising section of the LED current I_LED corresponds to the section in which the reference voltage generator 850 outputs the first time response waveform. When the first time response waveform reaches the peak value, the LED current I_LED is maintained at the peak value.

Then, when the optical data signal LDAT is at the high level and the control signal PWMrise is at the turn-off level, and the control signal PWMfall is at the turn-on level, the first transistor is turned off and the second transistor is turned on. The reference voltage generator 850 is thus operated in the second mode (mode 2). In the second mode (mode 2), the first falling section of the LED current I_LED corresponds to the section in which the reference voltage generator 850 outputs the second time response waveform.

When the optical data signal LDAT is at the high level and both the control signals PWMrise and PWMfall are at the turn-off level, the first transistor and the second transistor are both turned off. Therefore, the waveform of the LED current I_LED is attenuated according to the time constant determined by the first RC circuit (Rcom and Ccom). The attenuation section is the second falling section.

According to the display device 10 of the seventh embodiment of the invention, the waveform of the LED current I_LED includes a rising section and a falling section, and the falling section includes a first falling section and a second falling section. Therefore, the current varies relatively slowly. When the LED light source is turned off and then turned on, and when the LED light source is turned on and then turned off, for the same reason as that in the first embodiment, the magnitude of the parasitic capacitance varies more gradually, thus reducing waterfall noise.

When a square-wave current flows through the LED light source, the backlight driver 806 regulates the magnitude of the LED current I_LED such that the amount of the LED current I_LED is substantially equal to the amount of the current I_LED'.

While the present invention has been particularly shown and described with reference to exemplary embodiments thereof, it will be understood by those of ordinary skill in the art that various changes in form and details may be made therein without departing from the scope of the present invention as defined by the following claims.

## Claims

1. A display device (10) comprising:
an LED light source (LB) configured to emit light;
a display panel (300) configured to receive the light so as to facilitate display of an image;
wherein the display panel (300) includes a plurality of pixels (PX) and a-Si thin film transistors adapted to turn on the corresponding pixels (PX); and when the LED light source (LB) is turned on to emit light, the light is incident on an active layer of each of the a-Si thin film transistors; and
a backlight driver (800) configured to adjust the magnitude and the duty ratio of an LED current flowing through the LED light source;
wherein the backlight driver (800) is configured to provide the LED current having a waveform for generating light emission pulses that includes at least one of a rising section in which the magnitude of the LED current increases from a turn-off current value to a peak value, and a falling section in which the magnitude of the LED current decreases from the peak value to the turn-off current value, **characterized in that**
the backlight driver (800) is configured to reduce, during said rising section, the rate of increase of the magnitude of the LED current over time, and to reduce, during said falling section, the rate of decrease of the magnitude of the LED current over time.

2. The display device of claim 1, wherein the backlight driver (800) is configured to provide:
the waveform of the LED current including a turn-off section and a turn-on section that are alternately repeated;
the turn-off section having the turn-off current value; and
the turn-on section including at least one of the rising section and the falling section.

3. The display device of claim 1, wherein, during the rising section, the backlight driver (800) is configured to increase the magnitude of the LED current stepwise.

4. The display device of claim 1, wherein, during the falling section, the backlight driver (800) is configured to decrease the magnitude of the LED current stepwise.

5. The display device of claim 1, further comprising a signal controller (600) configured to provide an optical data signal (LDAT) having a duty ratio that is adjusted to correspond to the image displayed by the display panel,
wherein the duty ratio of the LED current is determined by a duty ratio of the optical data signal, and
wherein the backlight driver (800) is configured to regulate the waveform of the LED current according to that of a CCFL current.

6. The display device of claim 1, further comprising a signal controller providing an optical data signal (LDAT) having a duty ratio that is adjusted to correspond to the image displayed by the display panel,
wherein the backlight driver (800) is configured to provide the waveform of the LED current including the rising section in a section in which the optical data signal is at an on level, and the falling section in a section in which the optical data signal is at an off level, and the magnitude of the LED current being increased or decreased stepwise in the rising section and in the falling section.

7. The display device of claim 1, wherein:
the backlight driver (800) is configured to provide the LED current having a waveform in which the rising section and the falling section are alternately repeated at a predetermined duty radio, said duty ratio expressing the rising section and the falling section as respective fractions of one period of said waveform; and
the peak value is given a weight according to the gray level of the image displayed by the display panel.

8. The display device of claim 7, wherein the predetermined duty ratio is similar to the duty ratio of a CCFL current waveform.

9. The display device of claim 5, 6 or 8, wherein:
an amount of current flowing through the LED light source is substantially equal to that when a square wave would flow through the LED light source.

10. The display device of claim 1, wherein the peak value of the LED current is adjusted according to the gray level of the image displayed by the display panel.

## Patentansprüche

1. Anzeigevorrichtung (10), umfassend:
eine LED-Lichtquelle (LB), die dafür ausgelegt ist, Licht auszusenden;
eine Anzeigetafel (300), die dafür ausgelegt ist, das Licht zu empfangen, um das Anzeigen eines Bilds zu erleichtern;
wobei die Anzeigetafel (300) eine Vielzahl von Pixeln (PX) und a-Si-Dünnschichttransistoren umfasst, die geeignet sind, die entsprechenden Pixel einzuschalten; und wobei, wenn die LED-Lichtquelle (LB) eingeschaltet ist, um Licht auszusenden, das Licht auf eine aktive Schicht von jedem der a-Si-Dünnschichttransistoren einfällt; und
einen Hintergrundbeleuchtungstreiber (800), der dafür ausgelegt ist, die Größe und die relative Einschaltdauer eines LED-Stroms einzustellen, der durch die LED-Lichtquelle strömt;
wobei der Hintergrundbeleuchtungstreiber (800) dafür ausgelegt ist, den LED-Strom mit einer Wellenform zur Erzeugung von Lichtemissionsimpulsen zu liefern, welche mindestens eines von Folgendem umfasst: einen ansteigenden Abschnitt, in dem die Größe des LED-Stroms von einem Abschaltstromwert zu einem Spitzenwert ansteigt, und einen abfallenden Abschnitt, in dem die Größe des LED-Stroms vom Spitzenwert auf den Abschaltstromwert abfällt, **dadurch gekennzeichnet, dass**
der Hintergrundbeleuchtungstreiber (800) dafür ausgelegt ist, während des ansteigenden Abschnitts die Geschwindigkeit des Anstiegs der Größe des LED-Stroms im Verlauf der Zeit zu senken und während des abfallenden Abschnitts die Geschwindigkeit der Abnahme der Größe des LED-Stroms im Verlauf der Zeit zu senken.

2. Anzeigevorrichtung nach Anspruch 1, wobei der Hintergrundbeleuchtungstreiber (800) dafür ausgelegt ist, Folgendes bereitzustellen:
die Wellenform des LED-Stroms, die einen Abschaltabschnitt und einen Einschaltabschnitt umfasst, die abwechselnd wiederholt werden;
den Abschaltabschnitt, der den Abschaltstromwert aufweist; und
den Einschaltabschnitt, der mindestens einen aus dem ansteigenden Abschnitt und dem abfallenden Abschnitt umfasst.

3. Anzeigevorrichtung nach Anspruch 1, wobei der Hintergrundbeleuchtungstreiber (800) dafür ausgelegt ist, während des ansteigenden Abschnitts die Größe des LED-Stroms schrittweise zu erhöhen.

4. Anzeigevorrichtung nach Anspruch 1, wobei der Hintergrundbeleuchtungstreiber (800) dafür ausgelegt ist, während des abfallenden Abschnitts die Größe des LED-Stroms schrittweise zu senken.

5. Anzeigevorrichtung nach Anspruch 1, ferner umfassend eine Signalsteuervorrichtung (600), die dafür ausgelegt ist, ein optisches Datensignal (LDAT) zu liefern, das eine relative Einschaltdauer aufweist, die so eingestellt wird, dass sie dem Bild entspricht, das durch die Anzeigetafel angezeigt wird,
wobei die relative Einschaltdauer des LED-Stroms durch eine relative Einschaltdauer des optischen Datensignals bestimmt wird, und wobei der Hintergrundbeleuchtungstreiber (800) dafür ausgelegt ist, die Wellenform des LED-Stroms in Abhängigkeit von jener eines CCFL-Stroms zu regeln.

6. Anzeigevorrichtung nach Anspruch 1, ferner umfassend eine Signalsteuervorrichtung (600), die ein optisches Datensignal (LDAT) liefert, das eine relative Einschaltdauer aufweist, die so eingestellt wird, dass sie dem Bild entspricht, das durch die Anzeigetafel angezeigt wird, wobei der Hintergrundbeleuchtungstreiber (800) dafür ausgelegt ist, die Wellenform des LED-Stroms bereitzustellen, die Folgendes umfasst: den ansteigenden Abschnitt in einem Abschnitt, in dem sich das optische Datensignal in einem Ein-Zustand befindet, und den abfallenden Abschnitt in einem Abschnitt, in dem sich das optische Datensignal in einem AusZustand befindet, und wobei die Größe des LED-Stroms im ansteigenden Abschnitt und im abfallenden Abschnitt schrittweise erhöht oder vermindert wird.

7. Anzeigevorrichtung nach Anspruch 1, wobei:
der Hintergrundbeleuchtungstreiber (800) dafür ausgelegt ist, den LED-Strom bereitzustellen, der eine Wellenform aufweist, in welcher der ansteigende Abschnitt und der abfallende Abschnitt mit einer vorbestimmten relativen Einschaltdauer abwechselnd wiederholt werden, wobei die relative Einschaltdauer den ansteigenden Abschnitt und den abfallenden Abschnitt als jeweilige Bruchteile einer Periode der Wellenform ausdrückt; und
wobei dem Spitzenwert eine Gewichtung in Abhängigkeit von der Graustufe des durch die Anzeigetafel angezeigten Bilds zugewiesen wird.

8. Anzeigevorrichtung nach Anspruch 7, wobei die vorbestimmte relative Einschaltdauer ähnlich der relativen Einschaltdauer einer Wellenform eines CCFL-Stroms ist.

9. Anzeigevorrichtung nach Anspruch 5, 6 oder 8, wobei:
eine durch die LED-Stromquelle fließende Strommenge im Wesentlichen gleich jener ist, als wenn eine quadratische Welle durch die LED-Lichtquelle fließen würde.

10. Anzeigevorrichtung nach Anspruch 1, wobei der Spitzenwert des LED-Stroms in Abhängigkeit von der Graustufe des Bilds eingestellt wird, das durch die Anzeigetafel angezeigt wird.

## Revendications

1. Un dispositif d'affichage (10) comprenant :
Une source de lumière DEL (LB) configurée pour émettre de la lumière ;
Un panneau d'affichage (300) configuré pour recevoir la lumière afin de faciliter l'affichage d'une image ;
Où le panneau d'affichage (300) inclut une pluralité de pixels (PX) et des transistors à couches minces a-Si adaptés pour mettre sous tension les pixels correspondants (PX) ; et lorsque la source de lumière DEL (LB) est sous tension pour émettre de la lumière, la lumière est un incident sur une couche active de chacun des transistors à couches minces a-Si ; et
Un pilote de rétroéclairage (800) configuré pour régler l'ampleur et le facteur de marche d'un courant DEL passant au travers de la source de lumière DEL ;
Où le pilote de rétroéclairage (800) est configuré pour fournir le courant DEL ayant une forme d'onde pour générer des impulsions d'émission de lumière qui inclut au moins une section montante dans laquelle l'ampleur du courant DEL augmente à partir d'une valeur de courant d'interruption,
**caractérisé en ce que**
Le pilote de rétroéclairage (800) est configuré pour réduire, pendant cette section descendante, le taux d'augmentation de l'ampleur du courant DEL de façon prolongée, et pour réduire, pendant ladite section tombante, le taux de diminution de l'ampleur du courant DEL de façon prolongée.

2. Le dispositif d'affichage de la revendication 1, où le pilote de rétroéclairage (800) est configuré pour fournir :
La forme d'onde du courant DEL incluant une section d'interruption et une section de démarrage qui se répètent alternativement ;
La section d'interruption ayant la valeur de courant d'interruption ; et
La section de démarrage incluant au moins l'une des sections montantes et section descendante.

3. Le dispositif d'affichage de la revendication 1, où, pendant la section montante, le pilote de rétroéclairage (800) est configuré pour augmenter l'ampleur du courant DEL par étape.

4. Le dispositif d'affichage de la revendication 1, où, pendant la section descendante, le pilote de rétroéclairage (800) est configuré pour diminuer l'amplitude du courant DEL par étape.

5. Le dispositif d'affichage de la revendication 1, comprenant de plus un contrôleur de signal (600) configuré pour fournir un signal de données optiques (LDAT) ayant un facteur de marche qui est réglé pour correspondre à l'image affichée par le panneau d'affichage,
Où le facteur de marche du courant DEL est déterminé par un facteur de marche du signal de données optique, et
Où le pilote de rétroéclairage (800) est configuré pour régler la forme d'onde du courant DEL selon celle d'un courant CCFL.

6. Le dispositif d'affichage de la revendication 1, comprenant de plus un contrôleur de signal fournissant un signal de données optique (LDAT) ayant un facteur de marche qui est réglé pour correspondre à l'image affichée par le panneau d'affichage,
Où le pilote de rétroéclairage (800) est configuré pour fournir la forme d'onde du courant DEL comprenant la section montante dans une section dans laquelle le signal de données optique est à un niveau sous tension, et la section descendante dans une section dans laquelle le signal de données optique est à un niveau hors tension, et l'ampleur du courant DEL étant augmentée ou diminuée par étape dans la section montante et dans la section descendante.

7. Le dispositif d'affichage de la revendication 1, où :
Le pilote de rétroéclairage (800) est configuré pour fournir le courant DEL ayant une forme d'onde dans lequel la section montante et la section descendante se répètent alternativement, selon un facteur de marche prédéterminé, ledit facteur de marche exprimant la section montante et la section descendante en tant que fractions respectives d'une période de ladite forme d'onde ; et
La valeur de crête reçoit un poids selon le niveau gris de l'image affichée par le panneau d'affichage.

8. Le dispositif d'affichage de la revendication 7, où le facteur de marche prédéterminé est similaire au facteur de marche d'une forme d'onde de courant CCFL.

9. Le dispositif d'affichage de la revendication 5, 6 ou 8, où :
Une quantité de courant passant par la source de lumière DEL est substantiellement égale à celle lorsqu'une onde carrée passerait par la source de lumière DEL.

10. Le dispositif d'affichage de la revendication 1, où la valeur de crête du courant DEL est réglée selon le niveau gris de l'image affichée par le panneau d'affichage.
